# EUROPÄISCHE PATENTSCHRIFT

(11) **EP 1 700 668 B1**
(45) Veröffentlichungstag und Bekanntmachung des Hinweises auf die Patenterteilung: **08.09.2010**
(21) Anmeldenummer: 06003203.4
(22) Anmeldetag: 16.02.2006
(51) Int. Cl.: B23P 19/10, F02B 67/04, F02F 7/00, H02K 7/00, H02K 7/14, B60K 17/02

(54) **Vorrichtung zur Montage eines Motor getriebenen Aggregats am Schwungradgehäuse des Motors**
Device for mounting a motor driven unit to the flywheel housing of the motor
Dispositif pour assembler un organe motorisé au boîtier du volant d'inertie du moteur

(30) Priorität: 10.03.2005 DE 102005011528
(43) Veröffentlichungstag der Anmeldung: 13.09.2006
(73) Patentinhaber: Centa-Antriebe Kirschey GmbH, 42781 Haan (DE)
(72) Erfinder: Arnott, Bob, Grassington Nr Skipton BD18 1BW (GB)
(74) Vertreter: Ostriga, Sonnet, Wirths & Roche

(56) Entgegenhaltungen:
- EP-A- 0 407 738
- EP-A- 0 515 929
- US-A- 5 258 675

## Beschreibung

Die Erfindung bezieht sich auf eine Vorrichtung zur Montage eines Motor getriebenen Aggregats wie Hydraulikpumpe oder Getriebe am Schwungradgehäuse des Motors, wobei einerseits die Montagevorrichtung mit dem Schwungradgehäuse und andererseits das Aggregat mit der Montagevorrichtung, insbes. mittels Verschraubungen, montierbar ist und die Montagevorrichtung eine Zentrierbohrung für einen Zentrieransatz des Aggregats aufweist.

Solche Montagevorrichtungen, die z.B. bei hydrostatischen Antrieben für Baumaschinen in Verbindung mit Dieselmotoren verwendet werden, sind durch offenkundige, druckschriftlich nicht nachweisbare Vorbenutzung bekannt. Ihnen kommt die Aufgabe zu, das Aggregat, also z.B. eine hydrostatische Pumpe, mit dem Schwungradgehäuse des Dieselmotors ausgerichtet und fest zu verbinden. Dazu sind Zentrierungen zur Ausrichtung erforderlich und Verbindungsflansche für die Befestigung.

Montagevorrichtungen der bekannten Art sind relativ aufwendige Bauteile. Sie sind entweder als Gussteile verfügbar oder in Form von aus Vollstahl gedrehten und gefrästen Bauelementen. Je nach Größe weisen solche Montagevorrichtungen Materialstärken von ca. 12 bis 16 mm auf. Es handelt sich in jedem Fall um kostspielige Teile.

Die EP 0 515 929 offenbart eine Montagevorrichtung nach dem Oberbegriff des Anspruchs 1.

Der vorliegenden Erfindung liegt deshalb die Aufgabe zugrunde, eine Montagevorrichtung der gemäß Oberbegriff des Anspruchs 1 als bekannt vorausgesetzten Art verfügbar zu machen, die bei vereinfachtem Aufbau preisgünstiger ist. Ein weiterer Aspekt der Erfindung zielt auf eine universelle Verwendbarkeit der Montagevorrichtung für unterschiedlich dimensionierte Aggregate.

Die Erfindung löst diese Aufgabe mit den Merkmalen des Anspruchs 1 und ist dem zufolge dadurch gekennzeichnet, dass die Montagevorrichtung aus zwei im wesentlichen plattenartigen Teilen besteht, deren erster als Zentrierscheibe das Aggregat relativ zum Schwungradgehäuse zentriert und deren zweiter als Montageplatte die Zentrierscheibe und das Aggregat mindestens mittelbar mit dem Schwungradgehäuse verbindet.

Der wesentliche Kern der Erfindung besteht somit darin, die beiden Hauptaufgaben einer gattungsgemäßen Montagevorrichtung, nämlich die zentrierte Ausrichtung des Aggregats zum Schwungrad des Motors einerseits und die Befestigung des Aggregats am Schwungradgehäuse andererseits auf zwei je für sich einfach zu gestaltende Bauteile zu verteilen. Dabei übemimmt die Zentrierscheibe die Aufgabe der zentrierten Ausrichtung und die Montageplatte lagert das Aggregat fest am Schwungradgehäuse.

Aufgrund dieser Funktions- und Aufgabenteilung ist man in der Dimensionierung und Ausführung der beiden nunmehr diskreten plattenartigen Teile freier, da man jedes an seiner speziellen Funktion ausrichten und gestalten kann. Je nach Baugröße des Motors bzw. des Aggregats genügen nunmehr zwei relativ dünne Blechlatten von z.B. nur bis zu 5 mm für die Zentrierscheibe und bis zu etwa 8 mm für die Montageplatte. Dies alles führt zu einer wesentlichen baulichen Vereinfachung und zu einer erheblichen Kostenreduktion, nicht auch zuletzt infolge eines geringeren Materialeinsatzes.

In weiterer Ausgestaltung der Erfindung ist vorgesehen, dass die Montageplatte das Aggregat mittels Verschraubungen unmittelbar mit dem Schwungradgehäuse verbindet und die Zentrierscheibe an der Montageplatte fixiert ist. Dabei kann die Zentrierscheibe an der Montageplatte mittels derselben Verschraubung fixiert sein, mit der Aggregat und Montageplatte verbunden sind.

Des weiteren vorteilhaft ist eine Montagevorrichtung, die gekennzeichnet ist durch Anordnung von Zentrierscheibe und Montageplatte in flächiger Anlage ihrer Hauptflächen aneinander.

Im Hinblick auf die angestrebte Vereinfachung ist vorgesehen, dass die Zentrierscheibe und die Montageplatte von aus relativ dünnem Stahlblech ausgeschnittenen, insbes. lasergeschnittenen Platten gebildet sind.

Die Zentrierscheibe kann als Kreisringscheibe ausgebildet sein, die dadurch gekennzeichnet ist, dass lediglich ihr zentraler Durchbruch sowie ihr Außenumfang, insbesondere durch Drehen, nachbearbeitet sind zur passgenauen Aufnahme des Zentrieransatzes des Aggregats einerseits sowie zum passgenauen Einfügen in das Schwungradgehäuse andererseits.

Die Montageplatte der Montagevorrichtung kann einen im wesentlichen rechteckigen Umfang aufweisen und an wenigstens zwei einander gegenüberliegenden Rändern mit stabilisierenden Abkantungen versehen sein.

Nach einer besonderen Ausführung der Erfindung sind die Zentrierscheibe und die Montageplatte fest miteinander verbunden, vorzugsweise mittels wenigstens zweier Gewindebuchsen. Dabei dienen die Gewindebuchsen zweckmäßigerweise zur Aufnahme der Schaftgewinde von Schrauben, mittels derer Zentrierscheibe und Montageplatte mit einem Befestigungsflansch des Aggregats und/oder des Schwungradgehäuses verbindbar sind.

Dem oben genannten Aspekt der Erfindung im Hinblick auf eine universelle Verwendbarkeit der Montagevorrichtung für unterschiedlich dimensionierte Aggregate trägt die Erfindung gemäß weiterer Ausgestaltung dadurch Rechnung, dass zumindest die Zentrierscheibe mit allen zur wahlweisen Zwei- oder Vierpunktverschraubung erforderlichen Durchgriffsöffnungen für Schrauben zur wahlweisen Zwei- oder Vierpunktverschraubung versehen ist.

In erweiterter Ausführung können auch sowohl die Zentrierscheibe als auch die Montageplatte jeweils mit allen zur wahlweisen Zwei- oder Vierpunktverschraubung erforderlichen Durchgriffsöffnungen für Schrauben versehen sein.

Damit ist der Anwender völlig frei in der Montageart und kann sich wahlweise für eine der beiden typischen Befestigungsarten, nämlich die Zweipunktverschraubung oder die Vierpunktverschraubung frei entscheiden. Zudem verringert dies die herstellerseitige Lagerhaltung und ist insbesondere für kleinere Serien interessant.

In diesem Zusammenhang ist eine weitere Ausgestaltung von besonderer Bedeutung, die darin besteht, dass die Durchgriffsöffnungen in derartigen Lochbildern angeordnet sind, dass nur die jeweils zu benutzenden Durchgriffsöffnungen miteinander fluchten, die nicht benutzten Durchgriffsöffnungen jedoch von ungelochten Abschnitten von Zentrierscheibe bzw. Montageplatte abgedeckt sind. Der wesentliche Vorteil dieser erfindungsgemäßen Ausführung ist darin zu sehen, dass durch entsprechende Orientierung bzw. Überdeckung der beiden Platten sich das für die Befestigung geeignete Lochbild als Durchstecklochanordnung zeigt und damit auch die Montage erleichtert wird.

Im übrigen versteht sich die Erfindung am besten anhand der nachfolgenden Beschreibung von in den Zeichnungen dargestellten Ausführungsbeispielen. In den Zeichnungen zeigen:
- Fig. 1: eine Frontansicht der Montagevorrichtung mit Blick auf deren Montageplatte,
- Fig. 2: die Montagevorrichtung im Schnitt entsprechend der Schnittangabe II-II in Fig. 1, wobei wesentliche Teile, die mittels der Montagevorrichtung angeschlossen sind, in Ansicht lediglich schematisch dargestellt sind.
- Fig. 3: eine Darstellung gemäß Fig. 1 in einem dem gegenüber etwas vergrößerten Maßstab,
- Fig. 4: einen Schnitt entsprechend der Schnittlinie IV-IV in Fig. 3,
- Fig. 5: eine Darstellung gemäß Fig. 3 einer dem gegenüber leicht abgewandelten Ausführung einer Montagevorrichtung,
- Fig. 6: einen Schnitt entsprechend der Schnittlinie VI-VI in Fig. 5,
- Fig. 7: eine Ansicht nur der Zentrierscheibe der Montagevorrichtung,
- Fig.8: einen Schnitt durch die Zentrierscheibe entsprechend der Schnittlinie VIII-VIII in Fig. 6,
- Fig. 9: eine Ansicht einer besonderen Montageplatte der Montagevorrichtung,
- Fig. 10: einen Schnitt durch diese Montageplatte entsprechend der Schnittlinie IX-IX in Fig. 9, und
- Fig. 11: eine Seitenansicht der Montageplatte aus Fig. 9 entsprechend dem dortigen Ansichtspfeil XI.

In den Figuren ist eine Vorrichtung zur Montage eines Motor getriebenen Aggregats wie Hydraulikpumpe oder Getriebe am Schwungradgehäuse des Motors insgesamt mit 10 bezeichnet. Die Montagevorrichtung 10 umfasst zwei plattenförmige Teile 11 und 12, die nachfolgend mit Zentrierscheibe 11 und Montageplatte 12 bezeichnet werden.

Die Bezeichnung des plattenförmigen Teils 11 als Zentrierscheibe und des ebenfalls im wesentlichen plattenförmigen Teils 12 der Montageplatte dient lediglich der einfacheren Unterscheidung. Beide Teile sind platten- oder scheibenartige Teile, wobei die Zentrierscheibe als Kreisringkörper und die Montageplatte 12 bevorzugt als Rechteckplatte ausgestaltet sind.

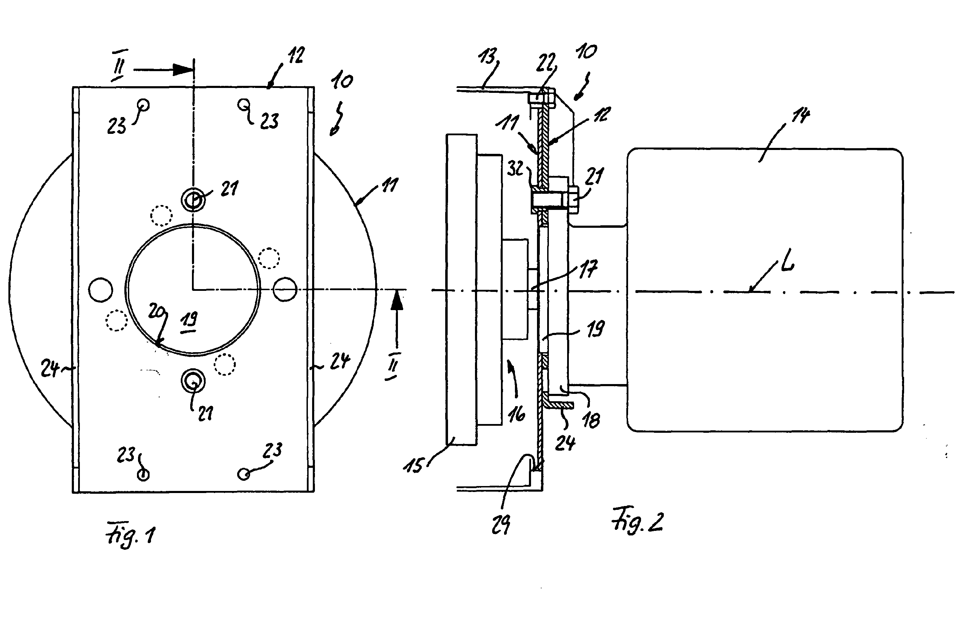

Fig. 2 veranschaulicht die Anordnung der Montagevorrichtung 10 im Zusammenhang mit einem Schwungradgehäuse 13 eines nicht dargestellten Dieselmotors und einem von diesem angetriebenen Aggregat 14. Mit 15 ist das Motorschwungrad bezeichnet, während 16 eine elastische Wellenkupplung und 17 die Antriebswelle für das Aggregat 14 bezeichnen.

Das Aggregat 14, z.B. eine hydrostatische Pumpe, weist auch einen Befestigungsflansch 18 sowie einen Zentrieransatz 19 auf. Die kreisringförmige Außenfläche ist in Fig. 1 mit 20 bezeichnet.

Wie des weiteren aus Fig. 2 ersichtlich ist, wird der Montageflansch 18 des Aggregats 14 mit der Montageplatte 12 verschraubt. In Fig. 2 ist eine der bei diesem Ausführungsbeispiel zwei vorhandenen Befestigungsschrauben mit 21 bezeichnet. 22 bezeichnet eine von insgesamt vier Schrauben, mit denen die Montageplatte 12 am Schwungradgehäuse 13 befestigt wird. Zum Durchgriff dieser Schrauben 22 befinden sich in der Montageplatte vier mit 23 bezeichnete Schraubendurchgriffsöffnungen.

Im übrigen ist die relativ dünne Montageplatte 12 in sich dadurch stabilisiert, dass sie an ihren Längsseiten rechtwinklige Abkantungen 24 aufweist.

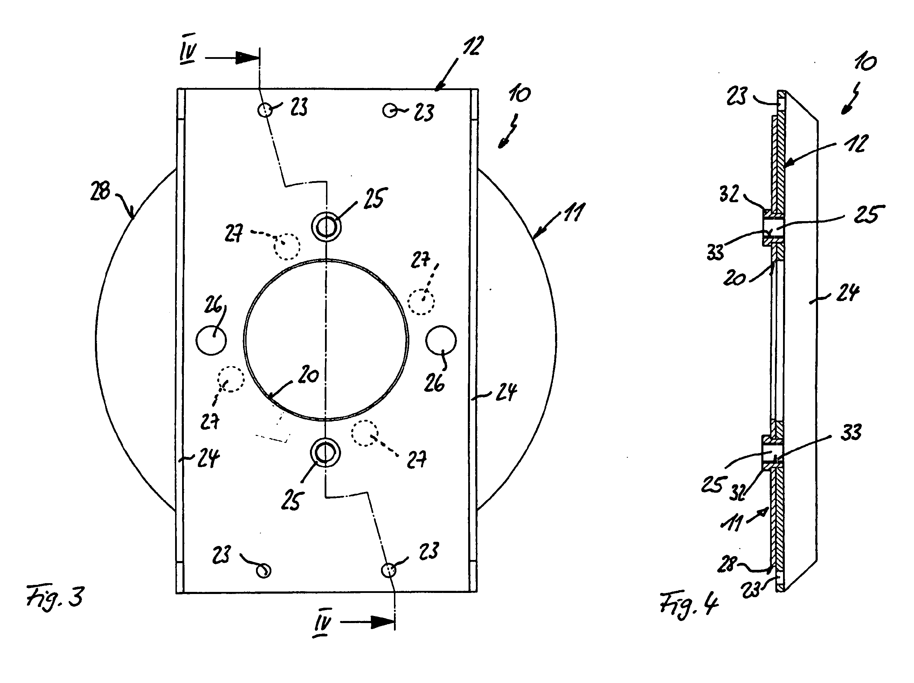

Die Montagevorrichtung entsprechend Fig. 1 ist in Fig. 3, auf die nunmehr Bezug genommen wird, noch einmal etwas größer dargestellt und zeigt eine Montageplatte 12 mit vier Schraubendurchgangsbohrungen 25 bzw. 26, wobei die Schrauben 21 (Fig. 2) beim dargestellten Ausführungsbeispiel die beiden einander diametral gegenüberliegenden Schraubendurchgangsbohrungen 25 nutzen, während die unter einem rechten Winkel dazu in der Montageplatte 12 angeordneten zwei weiteren Schraubendurchgangsbohrungen 26 unbenutzt bleiben. Sie werden benutzt, falls eine um 90° gedrehte Befestigungsanordnung gewählt wird.

Gestrichelt dargestellt sind in Fig. 3 vier auf einem kleineren Teilkreis als dem Teilkreis der Schraubendurchgangsbohrungen 25, 26 angeordnete Schraubendurchgangsbohrungen 27 in der Zentrierscheibe 11. Deren Sinn und Zweck wird weiter unten erläutert.

Die Zentrierscheibe 11 ist als Kreisringscheibe ausgebildet und weist einen Außenumfang 28 auf, der, wie der Innenumfang 20 z.B. durch Drehen oder ggf. auch Schleifen passgenau gearbeitet ist. Während der Innenumfang 20 der Zentrierscheibe 11 passgenau auf den Zentrieransatz 19 des Aggregats 14 abgestimmt ist, ist der kreisringförmige Außenumfang 28 auf eine Innenumfangs-Passfläche 29 (Fig. 2) des Schwungradgehäuses 13 angepasst, so dass das Aggregat 14 passgenau und bezüglich der System-Längsachse L (Fig. 2) passgenau und bündig ausgerichtet ist.

Bereits aus dem bisher Geschilderten wird deutlich, dass die Zentrierscheibe 11 eben diesen Zweck, nämlich den der zentrierten Ausrichtung zwischen Aggregat 14 und Schwungradgehäuse 13 übernimmt, wohingegen die Montageplatte 12 den festen Zusammenhalt der miteinander zu verbindenden Teile, also insbesondere des Aggregats 14 mit dem Schwungradgehäuse 13 gewährleistet.

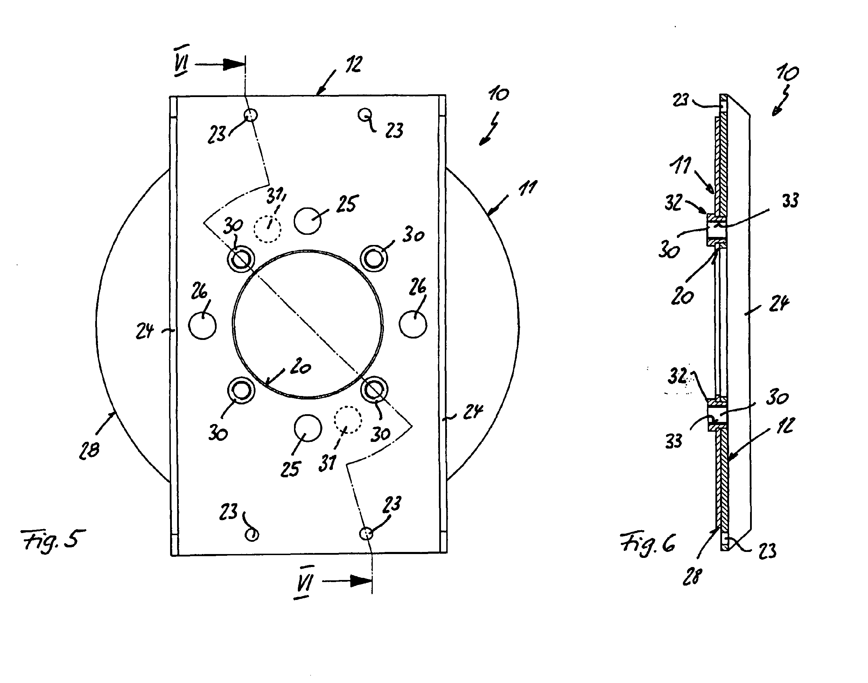

Fig. 5 und 6 zeigt eine gegenüber Fig. 3 und 4 abgewandelte Ausführungsform, die sich dadurch unterscheidet, dass jetzt eine Vierpunktbefestigung vorliegt, wohingegen Fig. 3 und 4 eine Zweipunktbefestigung zeigen. Nunmehr weist die Montageplatte 12 zusätzlich zu den Schraubendurchgriffsöffnungen 25 und 26 noch vier weitere Schraubendurchgangsbohrungen 30 auf, die so angeordnet sind, dass sie mit den in Fig.3 dargestellten, dort jedoch nicht benutzten, Schraubendurchgangsbohrungen 27 der Zentrierscheibe 11 fluchten können.

Mit 31 sind in Fig. 5 von der Montageplatte 12 verdeckte Schraubendurchgangsbohrungen in der Zentrierscheibe 11 bezeichnet, die bei der in Fig. 3 dargestellten Befestigungsart nicht benutzt werden.

Wie die Fig. 2, 4 und 6 des weiteren zeigen, sind Zentrierscheibe 11 und Montageplatte 12, mit ihren Hauptflächen aneinander liegend, miteinander fest verbunden, und zwar durch Gewindehülsen 32 (je nach Ausführung zwei Stück bei der Befestigungsart nach Fig. 1 bis 4 bzw. vier Stück nach der Befestigungsart der Fig. 3). Diese Gewindehülsen 32 sind mit Innengewinden 33 für den Einsatz der Gewindeschäfte der Schrauben 21 (Fig. 2) versehen. Die Gewindebuchsen 32 können z.B. in die Platten 11 und 12 eingepresst oder durch Schweißen an den Platten 11 und 12 befestigt sein.

Selbstverständlich sind auch andere Verbindungsmöglichkeiten ohne weiteres denkbar, z.B. ein Punktschweißen der Platten 11 und 12 aneinander.

Die Verbindung der Zentrierscheibe 11 mit der Montageplatte 12 im Sinne einer werkseitigen Konfektion ist für den Anwender vorteilhaft, da er die gesamte Vorrichtung 10 dann als ein Teil handhaben kann. Allerdings ist es auch ohne weiteres möglich, die Teile getrennt zu liefern und sie erst im Rahmen des Einbaus miteinander zu verbinden, und zwar mittels der ohnehin benötigten Verschraubungen.

Aufgrund der vorstehenden Beschreibung der erfindungsgemäßen Ausführungsbeispiele wird deutlich, dass die beiden plattenartigen Bauteile, nämlich die Zentrierscheibe 11 und die Montageplatte 12 sehr einfach gestaltete Bauteile aus relativ dünnem Material sind und auch deshalb kostengünstig gefertigt werden können. Insbesondere ist daran gedacht, sowohl die Zentrierscheibe 11 als auch die Montageplatte 12 aus Blechen entsprechender Dicke mittels Laserschneiden auszuschneiden. Bei der Zentrierscheibe 11 sind dann lediglich noch Innenumfang 20 und Außenumfang 28 zu überdrehen, wohingegen bei der Montageplatte 12 die Längsränder abzukanten sind, um die Abkantungen 24 zu erzeugen. Natürlich sind diese insbesondere dann nicht erforderlich, wenn die Materialdicke einer Montageplatte 12 für die jeweils gegebenen Verhältnisse aus Stabilitätsgründen ausreicht. Allerdings helfen die Abkantungen 24 erheblich, Material einzusparen.

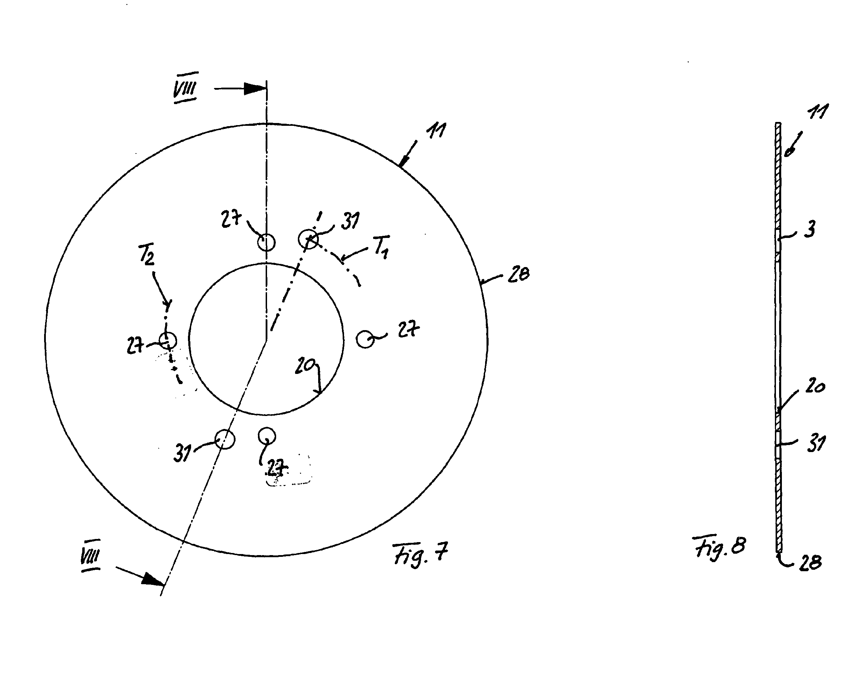

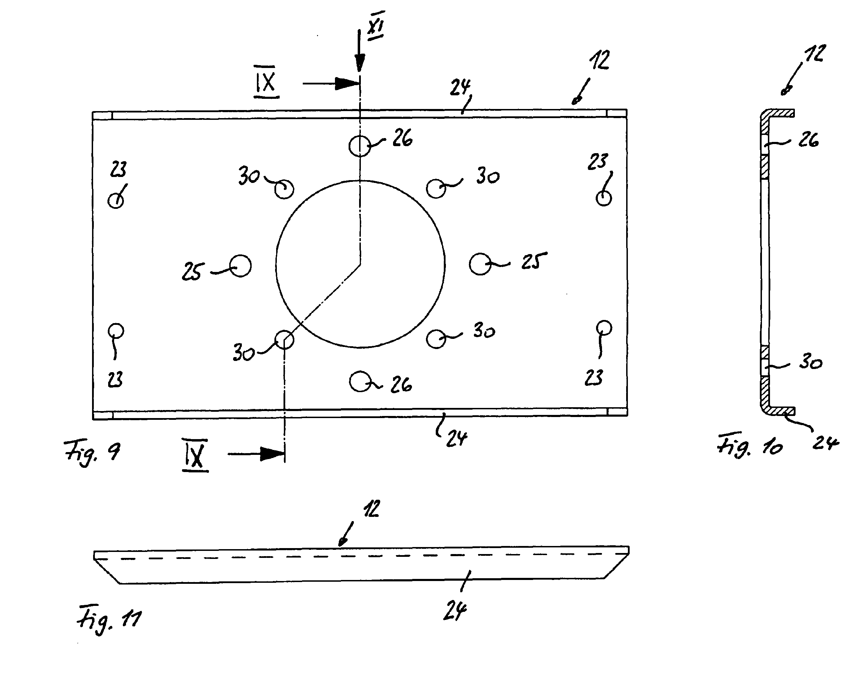

Zu den schon angedeuteten Lochbildem, d.h. die geometrische Anordnung der verschiedenen Schraubendurchgangsbohrungen in der Zentrierscheibe 11 und der Montageplatte 12 sei des weiteren auf die Fig. 7 bis 11 verwiesen, die die Zentrierscheibe (Fig. 7 und 8) sowie die Montageplatte (Fig. 9 bis 11) je für sich gesondert zeigen.

Die Zentrierscheibe 11 der Fig. 7 enthält zwei einander diametral gegenüberliegende Schraubendurchgangsbohrungen 31 auf einem Teilkreis T₁ sowie vier unter jeweils 90° Umfangswinkel zueinander stehende Schraubendurchgangsbohrungen 27 auf einem kleineren Teilkreis T₂. Damit enthält die in Fig. 7 und 8 dargestellte Zentrierscheibe 11 alle für eine wahlweise Zweipunkt- oder Vierpunktbefestigung, wie sie heute üblich sind, erforderlichen Schraubendurchgangsbohrungen 31 und 27.

Eine Montageplatte 12, die ebenfalls alle für diese Befestigungsarten erforderlichen Schraubendurchgangsbohrungen aufweist, zeigt Fig. 9. Zu den beiden diametral gegenüberliegenden Schraubendurchgangsbohrungen 31 der Zentrierscheibe 11 gehören zwei Paare von ebenfalls diametral gegenüberliegenden Schraubendurchgangsbohrungen 26 und 25, die auf dem Teilkreis T₁ angeordnet sind. Von diesen werden entweder die Schraubendurchgangsbohrungen 25 oder die Schraubendurchgangsbohrungen 26 verwendet, wozu die Zentrierscheibe 11 dann so angeordnet wird, dass ihre Schraubendurchgangsbohrungen 31 entweder mit den Schraubendurchgangsbohrungen 25 oder - um 90° gedreht - mit den Schraubendurchgangsbohrungen 26 fluchten.

Des weiteren enthält die Montageplatte 12 die vier Schraubendurchgangsbohrungen 30 für eine Vierpunktbefestigung.

Wie ein Vergleich der Fig. 7 und 9 miteinander zeigt, befinden sich sämtliche Schraubendurchgangsbohrungen 25, 26 und 30 in der Montageplatte 12 (Fig. 9) in gleichmäßigen Umfangswinkelabständen von 45°. Dahingegen sind die Schraubendurchgangsbohrungen 31 der Zentrierscheibe 11 (Fig. 7) gegenüber den Schraubendurchgangsbohrungen 27 umfangsversetzt angeordnet, so dass die Winkelabstände zwischen aufeinander folgenden Schraubendurchgangsbohrungen 31 und 27 entweder 67,5° oder 22,5° Umfangswinkel betragen.

Es ist nun ersichtlich, dass unabhängig von den drei möglichen Befestigungsarten, nämlich einer Zweipunktbefestigung mittels der Schraubendurchgangsbohrungen 25 oder einer um 90° verdrehten Zweipunktbefestigung mittels der Schraubendurchgangsbohrungen 26 oder aber einer Vierpunktbefestigung jeweils nur diejenigen Durchgangsbohrungen in der Zentrierscheibe 11 und der flächig darauf liegenden Montageplatte 12 miteinander in Flucht bringen lassen, die für die gewählte Befestigungsart bestimmt sind. Alle anderen Schraubendurchgangsbohrungen werden durch jeweils eines der beiden plattenartigen Teile 11 oder 12 verdeckt.

## Patentansprüche

1. Vorrichtung (10) zur Montage eines Motor getriebenen Aggregats (14) wie Hydraulikpumpe oder Getriebe am Schwungradgehäuse (13) des Motors, wobei einerseits die Montagevorrichtung (10) mit dem Schwungradgehäuse (13) und andererseits das Aggregat (14) mit der Montagevorrichtung (10), insbes. mittels Verschraubungen (21, 22), montierbar ist und die Montagevorrichtung (10) eine Zentrierbohrung (20) für einen Zentrieransatz (19) des Aggregats (14) aufweist, **dadurch gekennzeichnet, dass** die Montagevorrichtung (10) aus zwei im wesentlichen plattenartigen Teilen (11, 12) besteht, deren erster als Zentrierscheibe (11) das Aggregat (14) relativ zum Schwungradgehäuse (13) zentriert und deren zweiter als Montageplatte (12) die Zentrierscheibe (11) und das Aggregat (14) mindestens mittelbar mit dem Schwungradgehäuse (13) verbindet.

2. Montagevorrichtung nach Anspruch 1, **dadurch gekennzeichnet, dass** die Montageplatte (12) das Aggregat (14) mittels Verschraubungen (21, 22) unmittelbar mit dem Schwungradgehäuse (13) verbindet und die Zentrierscheibe (11) an der Montageplatte (12) fixiert ist.

3. Montagevorrichtung nach Anspruch 1 oder 2, **dadurch gekennzeichnet, dass** die Zentrierscheibe (11) an der Montageplatte (12) mittels derselben Verschraubung (21) fixiert ist, mit der Aggregat (14) und Montageplatte (12) verbunden sind.

4. Montagevorrichtung nach einem der vorherigen Ansprüche, **gekennzeichnet durch** Anordnung von Zentrierscheibe (11) und Montageplatte (12) in flächiger Anlage ihrer Hauptflächen aneinander.

5. Montagevorrichtung nach einem der vorherigen Ansprüche, **dadurch gekennzeichnet, dass** die Zentrierscheibe (11) und die Montageplatte (12) von aus Stahlblech ausgeschnittenen, insbes. lasergeschnittenen Platten gebildet sind.

6. Montagevorrichtung nach einem der vorherigen Ansprüche, **dadurch gekennzeichnet, dass** die Zentrierscheibe (11) als Kreisringscheibe ausgebildet ist.

7. Montagevorrichtung nach Anspruch 6, **dadurch gekennzeichnet, dass** lediglich der zentrale Durchbruch (20) sowie der Außenumfang (28) der Zentrierscheibe (11), insbesondere durch Drehen, nachbearbeitet sind zur passgenauen Aufnahme des Zentrieransatzes (19) des Aggregats (14) einerseits sowie zum passgenauen Einfügen in das Schwungradgehäuse (13) andererseits.

8. Montagevorrichtung nach einem der vorherigen Ansprüche, **dadurch gekennzeichnet, dass** die Montageplatte (12) einen im wesentlichen rechteckigen Umfang aufweist und an wenigstens zwei einander gegenüberliegenden Rändern mit versteifenden Abkantungen (24) versehen ist.

9. Montagevorrichtung nach einem der vorhergehenden Ansprüche, **dadurch gekennzeichnet, dass** die Zentrierscheibe (11) und die Montageplatte (12) fest miteinander verbunden sind.

10. Montagevorrichtung nach Anspruch 9, **dadurch gekennzeichnet, dass** die Zentrierscheibe (11) und die Montageplatte (12) mittels wenigstens zweier Gewindebuchsen (32) miteinander verbunden sind.

11. Montagevorrichtung nach Anspruch 10, **dadurch gekennzeichnet, dass** die Gewindebuchsen (32) zur Aufnahme der Schaftgewinde von Schrauben (21) dienen, mittels derer Zentrierscheibe (11) und Montageplatte (12) mit einem Befestigungsflansch (18) des Aggregats (14) und/oder des Schwungradgehäuses (13) verbindbar sind.

12. Montagevorrichtung nach einem der Ansprüche 1 bis 11, **dadurch gekennzeichnet, dass** zumindest die Zentrierscheibe (11) mit allen zur wahlweisen Zwei- oder Vierpunktverschraubung erforderlichen Durchgriffsöffnungen (27, 31) für Schrauben zur wahlweisen Zwei- oder Vierpunktverschraubung versehen ist.

13. Montagevorrichtung nach einem der Ansprüche 1 bis 11, **dadurch gekennzeichnet, dass** die Zentrierscheibe (11) und die Montageplatte (12) jeweils mit allen zur wahlweisen Zwei- oder Vierpunktverschraubung erforderlichen Durchgriffsöffnungen (27, 31; 25, 26, 30) für Schrauben versehen sind.

14. Montagevorrichtung nach Anspruch 12 oder 13, **dadurch gekennzeichnet, dass** die Durchgriffsöffnungen (27, 31; 25, 26, 30) in derartigen Lochbildem angeordnet sind, dass nur die jeweils benutzten Durchgriffsöffnungen (z.B. 25 oder 26 oder 30) miteinander fluchten, die nicht benutzten Durchgriffsöffnungen jedoch von ungelochten Abschnitten von Zentrierscheibe (11) bzw. Montageplatte (12) abgedeckt sind.

## Claims

1. Device (10) for mounting an engine-driven unit (14), such as a hydraulic pump or gearbox, on the flywheel housing (13) of the engine, wherein, on the one hand, the mounting device (10) can be mounted with the flywheel housing (13) and, on the other hand, the unit (14) can be mounted with the mounting device (10), particularly by means of screw connections (21, 22), and the mounting device (10) has a centring bore (20) for a centring extension (19) on the unit (14), **characterised in that** the mounting device (10) consists of two essentially plate-like parts (11, 12) of which the first, in the form of a centring disc (11), centres the unit (14) relative to the flywheel housing (13) and the second, in the form of a mounting plate (12), connects the centring disc (11) and the unit (14) at least indirectly to the flywheel housing (13).

2. Mounting device according to claim 1, **characterised in that** the mounting plate (12) connects the unit (14) directly to the flywheel housing (13) by means of screw connections (21, 22) and the centring disc (11) is fixed to the mounting plate (12).

3. Mounting device according to claim 1 or 2, **characterised in that** the centring disc (11) is fixed to the mounting plate (12) by means of the same screw connection (21) by which the unit (14) and the mounting plate (12) are connected.

4. Mounting device according to one of the preceding claims, **characterised by** the arrangement of the centring disc (11) and mounting plate (12) with their main faces abutting flat against one another.

5. Mounting device according to one of the preceding claims, **characterised in that** the centring disc (11) and the mounting plate (12) are formed by plates which are cut, particularly cut by laser, out of steel sheet.

6. Mounting device according to one of the preceding claims, **characterised in that** the centring disc (11) is constructed as an annular disc.

7. Mounting device according to claim 6, **characterised in that** only the central opening (20) and the outer periphery (28) of the centring disc (11) are finished, particularly by turning, for accurately fitting reception of the centring extension (19) of the unit (14) on the one hand, and for accurately fitting insertion in the flywheel housing (13) on the other.

8. Mounting device according to one of the preceding claims, **characterised in that** the mounting plate (12) has an essentially rectangular periphery and is provided, at at least two mutually opposite edges, with stiffening angled portions (24).

9. Mounting device according to one of the preceding claims, **characterised in that** the centring disc (11) and the mounting plate (12) are fixedly connected to one another.

10. Mounting device according to claim 9, **characterised in that** the centring disc (11) and the mounting plate (12) are connected to one another by means of at least two threaded bushes (32).

11. Mounting device according to claim 10, **characterised in that** the threaded bushes (32) serve to receive the shaft threads of screws (21) by means of which its centring disc (11) and mounting plate (12) can be connected to a fastening flange (18) on the unit (14) and/or on the flywheel housing (13).

12. Mounting device according to one of claims 1 to 11, **characterised in that** at least the centring disc (11) is provided with all the reach-through apertures (27, 31), which are required for optional two-point or four-point screwing-together, for screws for said optional two-point or four-point screwing-together.

13. Mounting device according to one of claims 1 to 11, **characterised in that** the centring disc (11) and the mounting plate (12) are each provided with all those reach-through apertures (27, 31; 25, 26, 30) for screws, which are required for optional two-point or four-point screwing-together.

14. Mounting device according to claim 12 or 13, **characterised in that** the reach-through apertures (27, 31; 25, 26, 30) are arranged in hole patterns such that only those reach-through apertures (e.g. 25 or 26 or 30) which are used at any given time are in alignment with one another, but those reach-through apertures which are not used are masked by non-perforated sections of the centring disc (11) or mounting plate (12) respectively.

## Revendications

1. Dispositif (10) pour le montage d'un agrégat (14) entraîné par moteur, tel qu'une pompe hydraulique ou une transmission sur le carter de volant d'inertie (13) du moteur, où, d'une part, le dispositif de montage (10) est susceptible d'être monté, en particulier au moyen de vissages (21, 22), avec le carter de volant d'inertie (13) et, d'autre part, l'agrégat (14) est susceptible d'être monté avec le dispositif de montage (10), et le dispositif de montage (10) présentant un perçage de centrage (20) pour un appendice de centrage (19) de l'agrégat, **caractérisé en ce que** le dispositif de montage (10) est composé de deux parties (11, 12) sensiblement en forme de plaques, dont la première, en tant que disque de centrage (11), centre l'agrégat (14) par rapport au carter de volant d'inertie (13), et dont la deuxième, en tant que plaque de montage (12), relie, au moins indirectement, le disque de centrage (11) et l'agrégat (14) au carter de volant d'inertie (13).

2. Dispositif de montage selon la revendication 1, **caractérisé en ce que** la plaque de montage (12) relie l'agrégat (14), au moyen de vissages (21, 22), directement au carter de volant d'inertie (13), et le disque de centrage (11) est fixé sur la plaque de montage (12).

3. Dispositif de montage selon la revendication 1 ou 2, **caractérisé en ce que** le disque de centrage (11) est fixé sur la plaque de montage (12), au moyen du même vissage (21) que celui à l'aide du quel l'agrégat (14) et la plaque de montage (12) sont reliés.

4. Dispositif selon l'une des revendications précédentes, **caractérisé par** l'agencement du disque de centrage (11) et de la plaque de montage (12) en appui à plat de leurs faces principales les unes sur les autres.

5. Dispositif selon l'une des revendications précédentes, **caractérisé en ce que** le disque de centrage (11) et la plaque de montage (12) sont formés de plaques obtenues par découpage, en particulier par découpage au laser, à partir de tôle d'acier.

6. Dispositif selon l'une des revendications précédentes, **caractérisé en ce que** le disque de centrage (11) est réalisé sous forme de disque en couronne circulaire.

7. Dispositif de montage selon la revendication 6, **caractérisé en ce que** seul le passage (20) central, ainsi que la périphérie extérieure (28) du disque de centrage (11), sont soumis à un réusinage, en particulier par tournage, pour recevoir, avec exactitude du repérage, l'appendice de centrage (19) de l'agrégat (14), d'une part, ainsi que pour l'insertion, avec exactitude du repérage, dans le carter de volant d'inertie (13), d'autre part.

8. Dispositif selon l'une des revendications précédentes, **caractérisé en ce que** la plaque de montage (12) présente une périphérie sensiblement rectangulaire et est munie, en au moins deux bords opposés l'un à l'autre, de replis (24) rigidificateurs.

9. Dispositif selon l'une des revendications précédentes, **caractérisé en ce que** le disque de centrage (11) et la plaque de montage (12) sont reliés ensemble rigidement.

10. Dispositif de montage selon la revendication 9, **caractérisé en ce que** le disque de centrage (11) et la plaque de montage (12) sont reliés ensemble à l'aide d'au moins deux douilles filetées (32).

11. Dispositif de montage selon la revendication 10, **caractérisé en ce que** les douilles filetées (32) servent à recevoir le filetage de tiges de vis (21), au moyen desquelles le disque de centrage (11) et la plaque de montage (12) sont susceptibles d'être reliés à une bride de fixation (18) de l'agrégat (14) et/ou du carter de volant d'inertie (13).

12. Dispositif selon l'une quelconque des revendications 1 à 11, **caractérisé en ce qu'**au moins le disque de centrage (11) est muni de toutes les ouvertures de passage (27, 31), nécessaires pour obtenir au choix un vissage en deux ou en quatre points, pour des vis servant à obtenir au choix un vissage en deux ou en quatre points.

13. Dispositif selon l'une quelconque des revendications 1 à 11, **caractérisé en ce que** le disque de centrage (11) et la plaque de montage (12) sont chacune munies de muni de toutes les ouvertures de passage (27, 31 ; 25, 26, 30), nécessaires pour obtenir au choix un vissage en deux ou en quatre points, pour des vis.

14. Dispositif de montage selon la revendication 12 ou 13, **caractérisé en ce que** les ouvertures de passage (27, 31 ; 25, 26, 30) sont disposées dans des schémas de perforation tels que seules les ouvertures de passage (par exemple 25 ou 26 ou 30) chaque fois utilisées soient alignées entre elles, que les ouvertures de passage non utilisées soient cependant couvertes par des tronçons non perforés du disque de centrage (11) ou de la plaque de montage (12).
